# EUROPÄISCHE PATENTSCHRIFT

(11) **EP 1 716 067 B1**
(45) Veröffentlichungstag und Bekanntmachung des Hinweises auf die Patenterteilung: **13.02.2008**
(21) Anmeldenummer: 05707375.1
(22) Anmeldetag: 14.02.2005
(51) Int. Cl.: B66F 9/07, B66F 9/08, B65G 1/04

(54) **REGALBEDIENGERÄT UND VERFAHREN FÜR EIN LÄNGSPOSITIONIEREN AN EINEM REGAL IN EINER KOMMISSIONIERANLAGE**
STORAGE AND RETRIEVAL UNIT AND METHOD FOR LONGITUDINALLY POSITIONING THE SAME ON A SHELVE IN A COMMISSIONING SYSTEM
APPAREIL DE RAYONNAGE ET PROCEDE DE POSITIONNEMENT LONGITUDINAL CONTRE UN RAYON DANS UN SYSTEME DE PREPARATION DES COMMANDES

(30) Priorität: 16.02.2004 DE 102004007411
(43) Veröffentlichungstag der Anmeldung: 02.11.2006
(73) Patentinhaber: Knapp Logistik Automation GmbH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2005/001468
(87) Internationale Veröffentlichungsnummer: WO 2005/077810

(56) Entgegenhaltungen:
- EP-A- 1 193 194
- CH-A- 518 863
- DE-A1- 19 534 291
- DE-U1- 20 205 633
- FR-A- 2 294 979

## Beschreibung

Die Erfindung betrifft ein Regalbediengerät nach dem Oberbegriff des Anspruchs 1, sowie ein Verfahren für ein Längspositionieren des Regalbediengeräts an einer Bedienstelle eines Regals an der Regalvorder- oder Regalrückseite, wobei an einem vertikalen Mast eine höhenverstellbare Güteraufnahme vorgesehen ist.

Ein vorgenanntes bekanntes Regalbediengerät ist vielfach innerhalb einer Kommissionieranlage bodenseitig in Schienen geführt und mittels Elektromotor an der Regalvorderseite oder Regalrückseite parallel bzw. längs verfahrbar und kann an einer ausgewählten Bedienstelle des Regals positioniert werden. Das Regalbediengerät besitzt in der Regel einen Fahrturm bzw. einen vertikalen Mast in Höhe des zu bedienenden Regals zumeist in einem Warenlager, wobei sich das Regal über mehrere Etagen bzw. Stockwerke erstrecken kann. Wegen der relativ großen Höhe des Fahrturms ist das Regalbediengerät durch den bodenseitigen Antrieb vergleichsweise instabil. Zusätzliche Stabilität wird durch eine aufwendige Konstruktion des Fahrturms und eine zusätzliche Längsführung des Regalbediengeräts im Bereich der Decke des Warenlagers oder im Bereich der Regaloberseite erreicht. Von Nachteil neben der sperrigen Bauweise ist, daß das Regalbediengerät nur relativ langsam verfahren und relativ zeitaufwendig an einer gewünschten Bedienstelle des Regals positioniert werden kann. Wird der hohe Fahrturm zu schnell bewegt bzw. getaktet, entsteht die Gefahr des Kippens und Verkantens des Fahrturmes im Bereich der Dekke bzw. Regaloberseite. Zumindest aber wird der Fahrturm großen Biegemomenten ausgesetzt, und es wird die obere Längsführung stark belastet, welche einem großen Verschleiß ausgesetzt ist.

Um vorgenanntem Nachteil zu begegnen, kennt man nach dem Stand der Technik beispielsweise nach DE 202 05 633.3 bei einem Regalbediengerät zusätzlich zum bodenseitigen Antrieb einen zweiten oberseitigen Längsantrieb, welcher synchron zum bodenseitigen Antrieb betrieben wird. Von Vorteil dabei ist, daß dadurch ein schnelleres Verfahren und Positionieren eines Regalbediengerätes vor oder hinter einem Regal oder innerhalb einer komplexen Kommissionieranlage möglich ist und der Fahrturm des Regalbediengerätes relativ schlank gebaut werden kann, da mittels des zweiten oberseitigen Längsantriebes die dynamischen Biegekräfte abgeleitet werden.

Es hat sich jedoch gezeigt, daß gerade bei großen Höhen eines vertikalen Mastes bzw. Fahrturms über mehrere Etagen eines Regals in einem hohen zumeist mehrgeschossigen Gebäude der lange Mast selbst großen Querbeschleunigungskräften bei schnellerer Fahrt ausgesetzt ist, zumal der vertikale Mast die zu kommissionierende Last trägt, und dadurch ein schnelleres Verfahren und Positionieren des Regalbediengeräts nur bedingt möglich ist. Zudem muß das Regalbediengerät für einen Notstopp konzipiert und entsprechend stabil konstruiert sein. Die am langen Mast auftretenden Kräfte werden also in jedem Fall über große Hebel übertragen. Insbesondere sind die am Mast auftretenden Biegemomente in Notstoppsituationen sehr groß, die vor allem an den Endlagenpuffern Probleme bereiten. Selbst bei einem zusätzlichen Antrieb an der oberen Mastführung kommt es also mitunter zu hohen Kräften an den Auflagerpunkten der oberen und unteren Fahrwerke, zumal durch den zusätzlichen Antrieb neue Kräfte in das System eingeleitet werden können, welches statisch nicht mehr bestimmt ist.

Aufgabe der Erfindung ist die Schaffung eines Regalbediengeräts der eingangs genannten Art, welches selbst bei vergleichsweise großer Masthöhe ein schnelles stabiles zuverlässiges Längspositionieren an einer Bedienstelle des Regals mit verblüffend einfachen Mitteln ermöglicht.

Aufgabe der Erfindung ist ferner die Schaffung eines vereinfachtes Arbeitsverfahrens für ein Längspositionieren des vorgenannten Regalbediengeräts.

Gelöst wird die der Erfindung zugrundeliegende Aufgabe durch ein Regalbediengerät der im Anspruch 1 angegebenen Art, vorteilhaft weitergebildet durch die Merkmale der Ansprüche 2 bis 15, sowie durch ein Verfahren der in den Ansprüchen 16 und 17 angegebenen Art.

Wesen der Erfindung ist, daß bei einem Regalbediengerät der infragestehenden Art der Mast als Knickmast ausgebildet ist und zumindest ein Gelenk aufweist, welches ein Auslenken des Knickmastes in Richtung des Längsverfahrens ermöglicht. Hierbei ist der Knickmast im Bereich des auslenkbaren Mastendes zur Stabilisierung mit einer Führungs-/Rückstell-Einrichtung ausgestattet, welche bei einem geführten Auslenken des Knickmastes aus der vertikalen Normallage den Knickmast wieder geführt in die Normallage zurückstellt. Die Führung des Knickmastes ist dergestalt konzipiert, daß auf der einen Seite das auslenkbare Ende des Knickmastes in Richtung des Längsverfahrens zwar ungehindert bogenförmig schwenken kann, auf der anderen Seite aber zumindest in Querrichtung zwangsgeführt ist, insbesondere auch längs des "Bogens" in Längsrichtung zwangsgeführt ist.

Das Gelenk liegt vorzugsweise im Bereich des Längsantriebs; welcher insbesondere im Bereich des oberen oder des unteren Mastendes angeordnet ist. Hierbei ist in spezieller Variante der Knickmast entweder an einem oberen Fahrwerk aufgehängt oder an einem unteren Fahrwerk abgestützt.

In besonderer Ausgestaltung weist die Führungs-/Rückstell-Einrichtung einen weiteren Längsantrieb nach Art des ersten Längsantriebes auf, und beide Längsantriebe werden vorzugsweise synchron betrieben sind.

Die Ansteuerung der beiden synchron angetriebenen Längsantriebe erfolgt vorzugsweise dergestalt, daß bei Normalbetrieb eines Längsverfahrens des Regalbediengeräts der Kippmast fortwährend vertikal angeordnet ist, während bei einem Notstopp des Regalbediengeräts eine geführte Auslenkung des Kippmastes erfolgt.

Die Ansteuerung der beiden Längsantriebe kann aber auch in einer Weise erfolgen, daß das Regalbediengerät von einer ruhenden Ausgangsstelle des Regals beschleunigt zu einer ausgewählten Bedienstelle des Regals und vor Erreichen der Bedienstelle verzögert dergestalt geradlinig in Längsrichtung des Regals verfahren wird, daß der Knickmast während zumindest eines Teils der Beschleunigungs- und/oder Verzögerungsbewegung geführt ausgelenkt und zumindest bei Stillstand des Regalbediengerätes in die ausgerichtete vertikale Normallage wieder geführt rückgestellt wird.

Durch die Erfindung lassen sich mit Vorteil große Masthöhen eines Regalbediengerätes realisieren, welches gleichwohl schnell und zuverlässig ohne Bruch im Normalbetrieb verfahren werden kann, und auch ein Notbetrieb bzw. ein Notstopp ohne Bruch von Einzelteilen bzw. ohne übermäßige Belastung der Auflagerstellen des oder der Fahrwerke möglich ist. Sind oben und unten Längsantriebe eingerichtet, wird das Fahrsystem gleichwohl statisch bestimmt betrieben. Das Fahrsystem verzeiht somit kleinere Asynchronitäten in den beiden Längsantrieben. Endlagenpuffer im Regal können relativ kurz gestaltet, d. h. relativ kurze Pufferwege vorgesehen werden. Besonderer Vorteil der Erfindung ist, daß aufgrund der relativ gering beanspruchten Lagerstellen des oder der Fahrwerke die Fahrwerke kompakt, insbesondere kurz und leichtgewichtig gebaut werden können, ohne daß die Fahrwerke kippen können, und auch ein längerer Betriebsbereich in der Regalgasse erreichbar ist.

Weitere vorteilhafte Merkmale der Erfindung ergeben sich aus der nachfolgenden Beschreibung, in der bevorzugte Ausführungsbeispiele der Erfindung anhand der Zeichnung näher erläutert werden; es zeigen:
- Figur 1: erfindungsgemäße Regalbediengeräte in Anordnung in einer Regalgasse eines Doppelregals einer Kommissionieranlage, in schematischer perspektivischer aufgebrochener Darstellung,
- Figur 2: das Regalbediengerät nach Figur 1 in einer ersten Ausführungsvariante,
- Figur 3: das Regalbediengerät nach Figur 1 in einer zweiten Ausführungsvariante,
- Figur 4: das Regalbediengerät nach Figur 2 in seinen beiden Auslenkstellungen in einer Seitenansicht,
- Figur 5: das Regalbediengerät nach Figur 4 in seiner vertikalen Normalstellung in einer Seitenansicht,
- Figur 6: das Regalbediengerät nach Figur 5 in einer Stirnansicht,
- Figur 7: obere und untere Einzelheiten des Regalbediengeräts nach den Figuren 2 bis 6 in perspektivischer Darstellung,
- Figuren 8 und 9: Kräftediagramme eines Regalbediengeräts nach Figur 2 , links, im Vergleich zum Stand der Technik, rechts, und
- Figuren 10 bis 13: das Regalbediengerät nach Figur 3 in der zweiten Ausführungsvariante in Darstellungen ähnlich den Figuren 4 bis 7 der ersten Ausführungsvariante.

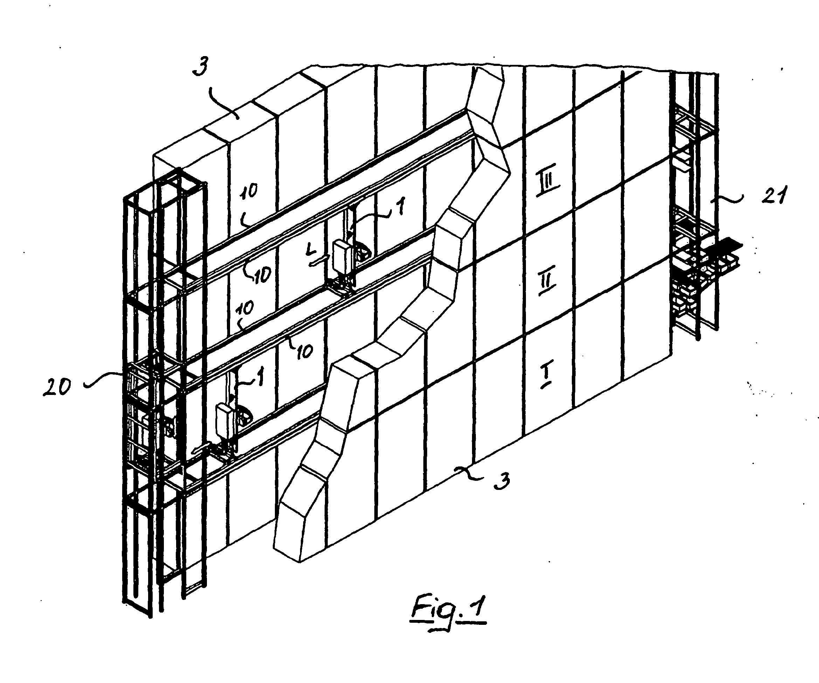

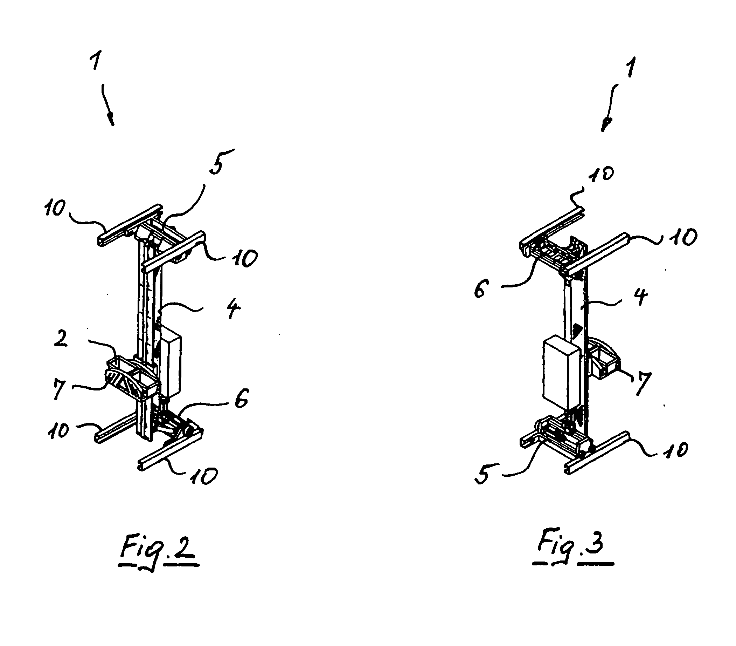

Gemäß Zeichnung umfaßt eine hier nicht näher interessierende Kommissionieranlage ein Doppelregal gemäß Figur 1 bestehend aus zwei Regalen 3 mit in der Regalgasse angeordneten Regalbediengeräten 1 entweder in der Ausführungsvariante nach Figur 2 oder in der Ausführungsvariante nach Figur 3.

Gemäß Figur 1 sind die Regalbediengeräte 1 oberseitig und unterseitig in Schienen 10 geführt, welche integrierte Bestandteile der Regale 3, d. h. Bauteile der Regale, sind.

Die Regalbediengeräte 3 können horizontal in Längsrichtung L der Regale 3 in der Regalgasse in übereinander angeordneten Ebenen I, II, III der Regale 3 verfahren werden und zugewandte Regalfronten bedienen.

Die Regalbediengeräte 3 können über einen Lift 20 von einer Regalebene vertikal in eine andere ausgewählte Regalebene vertikal verfahren und in dieser Regalebene durch horizontales Verfahren in der Regalgasse zum Einsatz gebracht werden.

Der Lift 20 gemäß Figur 1 befindet sich an einem Längsende der Regale 3. Am anderen Längsende der Regale befindet sich ein Material- bzw. Güterlift 21, der zu kommissionierende Güter vertikal in die ausgewählte Regalebene transportiert, bevor das dort vorhandene Regalbediengerät 3 die Güter für ein Einlagern in ein Regal ergreift oder nach einer Regalentnahme dort abgibt. Die Güter 2 können auch zusammen mit dem Regalbediengerät 3 vertikal im Lift 20 verfahren werden.

Ein Regalbediengerät 1 gemäß Figur 1 weist einen vertikalen Mast 4 auf und besitzt zum einen einen mit dem Mast verbundenen Längsantrieb 5 oben und zum anderen einen weiteren Längsantrieb 6 unten gemäß Figur 2 für ein Längsverfahren und ein Längspositionieren des Regalbediengeräts an einer Bedienstelle des Regals an der Regalvorder- oder Regalrückseite, wobei am vertikalen Mast eine höhenverstellbare Güteraufnahme 7 vorgesehen ist.

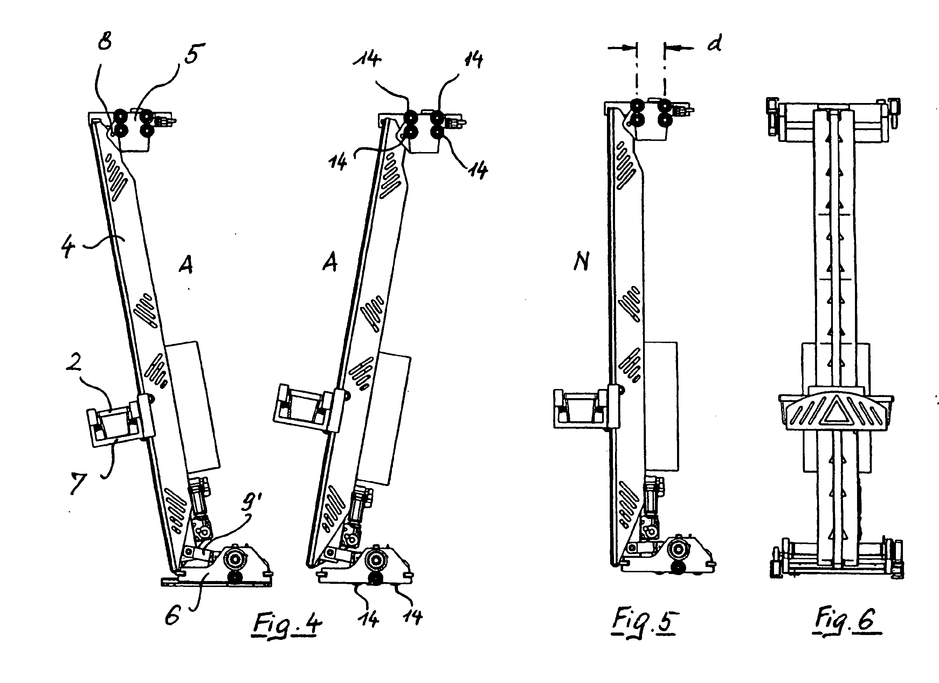

Insbesondere ist der Mast als Knickmast 4 mit einem Gelenk 8 ausgebildet, welches ein geführtes Auslenken A des Knickmastes in Richtung des Längsverfahrens L ermöglicht, wie dies in den Figuren 4 dargestellt ist.

Das Gelenk 8 liegt im Bereich des oberen Längsantriebs 5 am oberen Mastende.

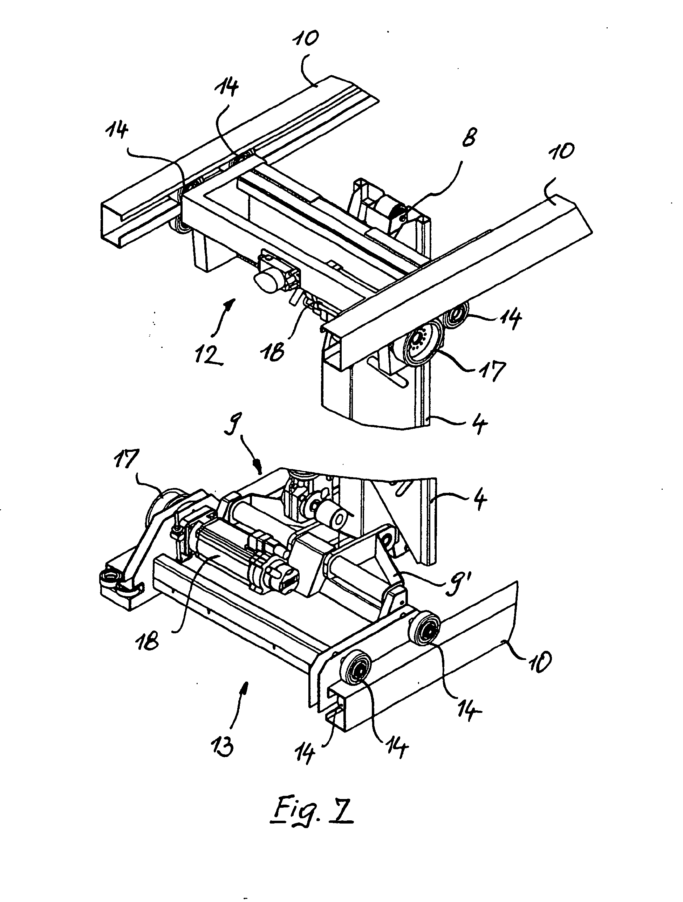

Insbesondere ist der Knickmast 4 an einem oberen Fahrwerk 12 gemäß Figur 7 in einer Pendelanordnung aufgehängt. Am anderen unteren auslenkbaren Mastende weist der Knickmast 4 zur Stabilisierung eine Führungs-/Rückstell-Einrichtung 9 auf, welche bei einem geführten Auslenken A des Knickmastes 4 aus der vertikalen Normallage N den Knickmast wieder geführt in die Normallage zurückstellt. Die Führung des Knickmastes ist dergestalt konzipiert, daß auf der einen Seite das auslenkbare Ende des Knickmastes in Richtung des Längsverfahrens zwar ungehindert bogenförmig schwenken kann, auf der anderen Seite aber zumindest in Querrichtung zwangsgeführt ist, insbesondere auch längs des "Bogens" in Längsrichtung zwangsgeführt ist.

Die Führungs-/Rückstell-Einrichtung 9 ist mit dem unteren weiteren Längsantrieb 6 gelenkig verbunden.

Oberer und unterer Längsantrieb 5, 6 sind im wesentlichen gleich aufgebaut. Beide Längsantriebe 5, 6 sind synchron dergestalt betrieben, daß bei Normalbetrieb eines Längsverfahrens L des Regalbediengeräts 1 der Kippmast 4 vertikal gemäß Figur 5 angeordnet ist, und daß bei einem Notstopp des Regalbediengeräts eine geführte Auslenkung A des Kippmastes 4 gemäß Figur 4 erfolgt, je nach der Richtung der Einwirkung der Verzögerungskraft.

Die Führungs-/Rückstell-Einrichtung 9 weist ein Schwenkgestänge auf, insbesondere eine gelenkig angelenkte Schwinge 9', welche um eine horizontale Achse schwenkbar ist, wobei das untere Mastende gelenkig mit der Schwinge 9' verbunden ist.

Insbesondere kann am auslenkbaren Mastende eine bogenförmige Führung, insbesondere eine Kulissenführung mit seitlichen Kulissensteinen am auslenkbaren Ende des Knickmastes vorgesehen sein, welche eine exakte bogenförmige Führung des auslenkbaren Endes des Knickmastes bei ungehindertem Auslenken des Knickmastes längs des Bogens und spielfreier Führung in Querrichtung ermöglicht.

Auch kann die Führungs-/Rückstell-Einrichtung 9 elastische Rückstellmittel umfassen.

In spezieller Ausgestaltung weist das obere und das untere Fahrwerk 12, 13 vier horizontale Achsen mit endseitigen Rollen 14 auf, welche in den Schienen 10 kippfest geführt sind, wobei jeweils zwei Achsen als Achspaar übereinander angeordnet und beide Achspaare horizontal in einem geringen Abstand d horizontal voneinander beabstandet sind, vorzugsweise in einem Abstand d vom zwei- bis dreifachen Durchmesser der Rollen 14, wie dies in Figur 5 gezeigt ist.

Das Fahrwerk 12 bzw. 13 weist einen eigenen Elektroantrieb 18 mit einem Reibrad 17 als Antriebsrad auf, welches in einem Reibroll-Antriebs-Eingriff mit einer der Schienen 10 steht.

Der Knickmast 4, insbesondere das Gelenk 8, kann auch eine (nicht veranschaulichte) Sperrvorrichtung aufweisen, welche ein Auslenken A des Knickmastes bis zu einem Mast-Belastungs-Grenzwert verhindert und bei Überschreiten des Mast-Belastungs-Grenzwertes das Auslenken A des Knickmastes 4 gestattet.

Der Mast-Belastungs-Grenzwert kann gegebenenfalls eingestellt werden. Der Mast-Belastungs-Grenzwert kann ein Querkraft-Grenzwert des Knickmastes 4 oder ein Beschleunigungs-/Verzögerungs-Grenzwert des längsverfahrbaren Regalbediengerätes sein.

Ein vorgenanntes Regalbediengerät 1 nach den Figuren 2, 4 bis 7 kann nicht nur dergestalt betrieben werden; daß bei Normalbetrieb eines Längsverfahrens des Regalbediengeräts 1 der Kippmast 4 fortwährend vertikal gemäß Figur 5 angeordnet bleibt, während bei einem Notstopp des Regalbediengeräts eine geführte Auslenkung A des Kippmastes 4 gemäß Figur 4 erfolgt, sondern daß das Regalbediengerät 1 bei entsprechender Ansteuerung von einer ruhenden Ausgangsstelle des Regals 3 beschleunigt zu einer ausgewählten Bedienstelle des Regals und vor Erreichen der Bedienstelle verzögert dergestalt geradlinig in Längsrichtung L des Regals verfahren wird, daß der Knickmast 4 während zumindest eines Teils der Beschleunigungs- und/oder Verzögerungsbewegung gemäß Figur 4 geführt ausgelenkt und zumindest bei Stillstand des Regalbediengerätes in die ausgerichtete vertikale Normallage N gemäß Figur 5 wieder geführt rückgestellt wird.

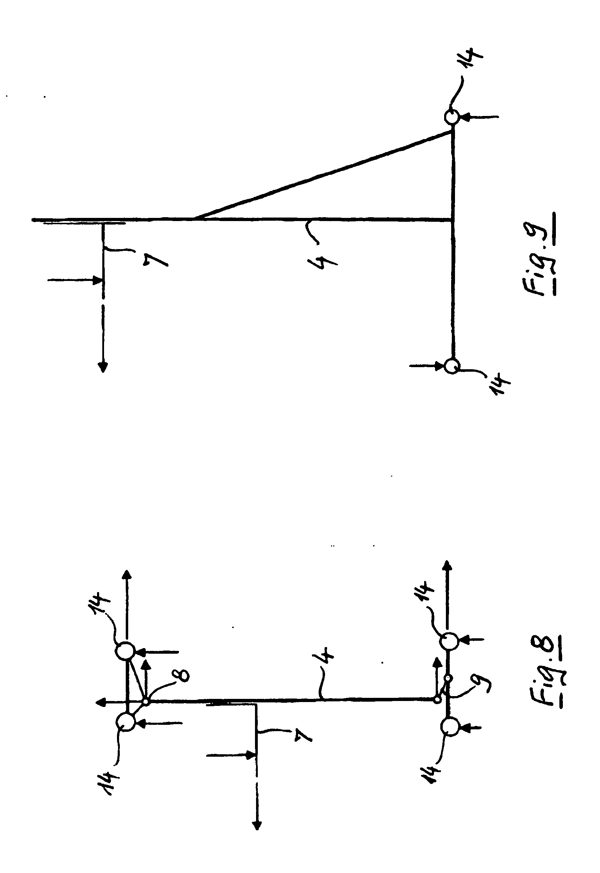

In Figur 8 ist das vorgenannte erfindungsgemäße Regalbediengerät 1 mit am oberen Fahrwerk 12 im Gelenkpunkt 8 aufgehängtem Knickmast 4 hinsichtlich der Krafteinwirkung schematisch dargestellt, während in Figur 9 der Stand der Technik mit starrem Mast und unterem Fahrwerk 13 kräftemäßig gezeigt ist.

Gemäß Figur 9 werden nach dem Stand der Technik die Kräfte am Fahrzeug über große Hebel übertragen. Am Mast treten hohe Biegemomente auf, die vor allem bei Notstoppsituationen an den Endlagenpuffern des Regals 3 bzw. der Schienen 10 Probleme bereiten. Große Pufferwege, um die Verzögerungsbeschleunigung gering zu halten, sind die Folge. Selbst wenn ein zusätzlicher Antrieb an der oberen Mastführung verwendet wird, kommt es mitunter zu hohen Kräften an den Auflagerpunkten des Fahrwerks bzw. der Rollen 14, da durch den zusätzlichen Antrieb neue Kräfte eingeleitet werden können. Das System ist nicht mehr statisch bestimmt.

Gemäß Figur 8 wird demgegenüber erfindungsgemäß der Mast als Knickmast 4 über ein Gelenk 8 gelenkig am oben liegenden Führungswagen aufgehängt. Der unten liegende Wagen dient nur zur Stabilisierung, d. h. zur senkrechten Ausrichtung des Mastes. Diese Pendelanordnung mit Ausbildung einer Schwinge kann im Fehlerfall nicht kippen. Das System kann sich auch in einem Fehlerfall nicht zerstören, z. B. bei einem Zahnriemenantrieb bei einem Riss des Riemens oder bei einem Reibradantrieb bei einem Ausfall des benötigten Reibschlusses. Die maximalen Biegemomente im Knickmast 4 sind gering. Die Einleitung der Kräfte an den oberen Führungswagen erfolgt am Gelenkpunkt des Mastes. Die Aufprallenergie an den Endlagen teilt sich auf die beiden Führungswagen auf. Durch die geringeren zu erwartenden Momente bei einem Aufprall können auch kleinere Pufferwege realisiert werden.

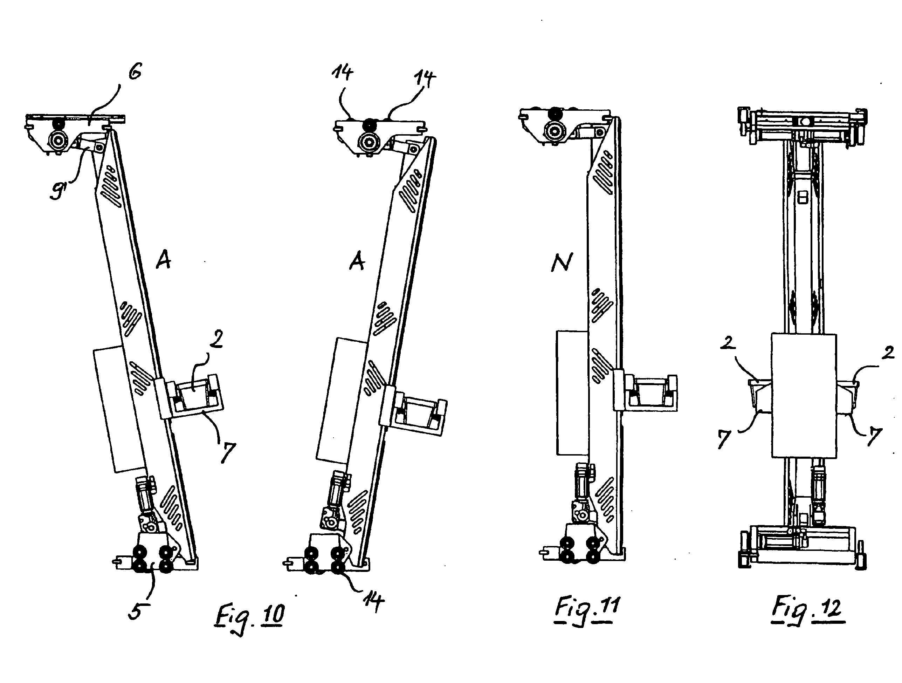

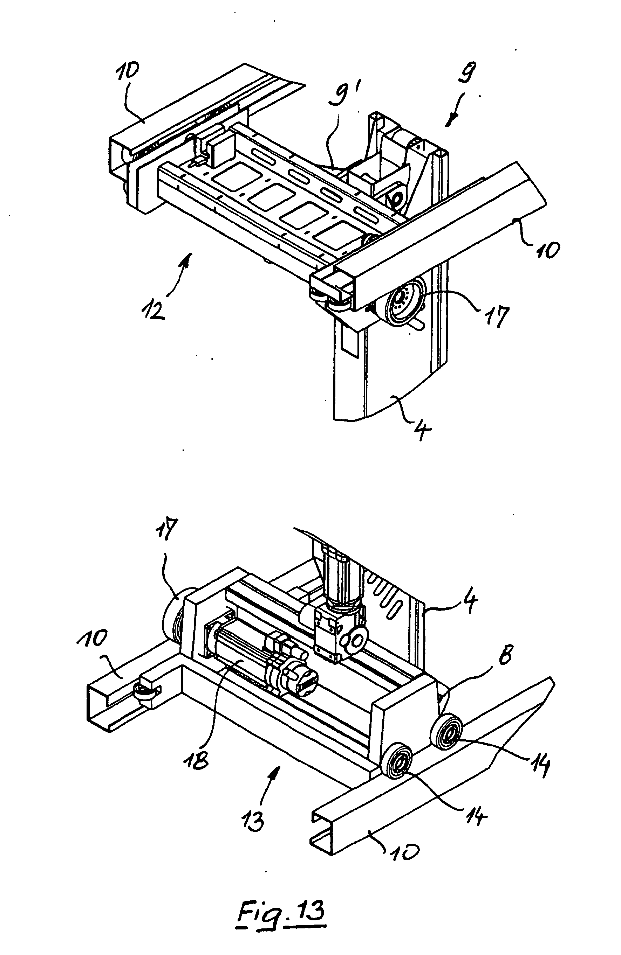

Während in der ersten vorstehend beschriebenen Ausführungsvariante der Kippmast 4 oben beim oberen Fahrwerk 12 bei einem oberen Gelenk 8 am oberen Mastende gelenkig aufgehängt ist und beim unteren Fahrwerk über ein Schwenkgestänge mit einer Schwinge 9' stabilisiert ist, ist nach den Figuren 3 und 10 bis 13 die Anordnung hinsichtlich des Kippmastes, des Gelenkpunktes und der Fahrwerke umgekehrt gestaltet, nämlich der Kippmast 4 bei einem unteren Gelenk 8 am unteren Mastende gelenkig am unteren Fahrwerk 13 abgestützt, und beim oberen Fahrwerk 12 das auslenkbare Mastende mit der Schwinge 9' bzw. Führungs-/Rückstell-Einrichtung 9, etc. vorgesehen. Ansonsten sind entsprechende Bauteile dieser zweiten Variante gleich oder ähnlich der ersten Variante konzipiert.

## Patentansprüche

1. Regalbediengerät (1) für einen Transport von Gütern (2) aus einem bzw. in ein Regal (3) in einer Kommissionieranlage, mit einem vertikalen Mast (4) und einem mit dem Mast verbundenen Längsantrieb (5) für ein Längsverfahren und ein Längspositionieren des Regalbediengeräts an einer Bedienstelle des Regals an der Regalvorder- oder Regalrückseite, wobei am vertikalen Mast eine höhenverstellbare Güteraufnahme (7) vorgesehen ist,
**dadurch gekennzeichnet,**
**daß** der Mast als Knickmast(4) ausgebildet ist und zumindest ein Gelenk (8) aufweist, welches ein Auslenken (A) des Knickmastes in Richtung des Längsverfahrens (L) ermöglicht, und daß am auslenkbaren Längsende des Knickmastes zur Stabilisierung eine Führungs-/Rückstell-Einrichtung (9) mit einem Schwenkgestänge, insbesondere eine gelenkig angelenkte Schwinge (9'), vorgesehen ist, welche bei einem geführten Auslenken (A) des Knickmastes (4) aus der vertikalen Normallage (N) den Knickmast wieder geführt in die Normallage zurückstellt.

2. Regalbediengerät nach Anspruch 1,
**dadurch gekennzeichnet,**
**daß** das Gelenk (8) im Bereich des Längsantriebs (5) liegt.

3. Regalbediengerät nach Anspruch 1 oder 2,
**dadurch gekennzeichnet,**
**daß** der Längsantrieb (5) im Bereich des oberen oder des unteren Mastendes angeordnet ist, insbesondere der Knickmast (4) an einem oberen Fahrwerk (12) aufgehängt oder an einem unteren Fahrwerk (13) abgestützt ist.

4. Regalbediengerät nach einem der Ansprüche 1 bis 3,
**dadurch gekennzeichnet,**
**daß** die Führungs-/Rückstell-Einrichtung (9) einen weiteren Längsantrieb (6) nach Art des Längsantriebes (5) aufweist, wobei beide Längsantriebe (5, 6) vorzugsweise synchron betrieben sind.

5. Regalbediengerät nach Anspruch 4,
**dadurch gekennzeichnet,**
**daß** beide Längsantriebe (5, 6) dergestalt synchron betrieben sind, daß bei Normalbetrieb eines Längsverfahrens des Regalbediengeräts (1) der Kippmast (4) vertikal angeordnet ist, und daß bei einem Notstopp des Regalbediengeräts eine geführte Auslenkung (A) des Kippmastes (4) erfolgt.

6. Regalbediengerät nach einem der Ansprüche 1 bis 5,
**dadurch gekennzeichnet,**
**daß** die Führungs-/Rückstell-Einrichtung (9) elastische Rückstellmittel umfaßt.

7. Regalbediengerät nach einem der Ansprüche 1 bis 6,
**dadurch gekennzeichnet,**
**daß** für ein Längsverfahren (L) des Regalbediengeräts zu einer Bedienstelle des Regals an der Regalvorder- oder Regalrückseite die am Knickmast (4) höhenverstellbare Güteraufnahme (7) sich im Bereich des Gelenks (8) befindet.

8. Regalbediengerät nach einem der Ansprüche 3 bis 7,
**dadurch gekennzeichnet,**
**daß** das obere und/oder untere Fahrwerk (12, 13) in Schienen (10) kippfest geführt ist/sind.

9. Regalbediengerät nach Anspruch 8,
**dadurch gekennzeichnet,**
**daß** die Schienen (10) integrierter Bestandteil des Regals (3) sind.

10. Regalbediengerät nach einem der Ansprüche 3 bis 9,
**dadurch gekennzeichnet,**
**daß** das Fahrwerk (12 bzw. 13) zumindest vier Achsen mit endseitigen Rollen (14) aufweist, welche in den Schienen (10) kippfest geführt sind, wobei jeweils zwei Achsen als Achspaar übereinander angeordnet und beide Achspaare horizontal in einem geringen Abstand (d) horizontal voneinander beabstandet sind, vorzugsweise in einem Abstand (d) vom zwei- bis dreifachen Durchmesser der Rollen (14).

11. Regalbediengerät nach Anspruch 10,
**dadurch gekennzeichnet,**
**daß** das Fahrwerk (12 bzw. 13) einen eigenen Elektroantrieb (18) mit einem Reibrad (17) als Antriebsrad aufweist, welches in einem Roll-Antriebs-Eingriff mit einer der Schienen (10) steht.

12. Regalbediengerät nach einem der Ansprüche 1 bis 11,
**dadurch gekennzeichnet,**
**daß** der Knickmast (4), insbesondere das Gelenk (8), eine Sperrvorrichtung aufweist, welche ein Auslenken (A) des Knickmastes bis zu einem Mast-Belastungs-Grenzwert verhindert und bei Überschreiten des Mast-Belastungs-Grenzwertes das Auslenken (A) des Knickmastes (4) gestattet.

13. Regalbediengerät nach Anspruch 12,
**dadurch gekennzeichnet,**
**daß** der Mast-Belastungs-Grenzwert einstellbar ist.

14. Regalbediengerät nach Anspruch 12 oder 13,
**dadurch gekennzeichnet,**
**daß** der Mast-Belastungs-Grenzwert ein Querkraft-Grenzwert des Knickmastes (4) oder ein Beschleunigungs-/Verzögerungs-Grenzwert des längsverfahrbaren Regalbediengerätes ist.

15. Regalbediengerät nach einem der Ansprüche 1 bis 14,
**dadurch gekennzeichnet,**
**daß** die Führungs-/Rückstell-Einrichtung (9), vorzugsweise anstelle des Schwenkgestänges oder der Schwinge, eine bogenförmige Führung, insbesondere eine Kulissenführung mit seitlichen Kulissensteinen am auslenkbaren Ende des Knickmastes umfaßt, welche eine exakte bogenförmige Führung des auslenkbaren Endes des Knickmastes bei ungehindertem Auslenken des Knickmastes längs des Bogens und spielfreier Führung in Querrichtung ermöglicht.

16. Verfahren zum Längspositionieren des Regalbediengerätes an einer Bedienstelle des Regals (3) nach einem der Ansprüche 1 bis 15,
**dadurch gekennzeichnet,**
**daß** der oder die Längsantriebe (5, 6) dergestalt betrieben sind, daß bei Normalbetrieb eines Längsverfahrens des Regalbediengeräts (1) der Kippmast (4) vertikal angeordnet ist, und daß bei einem Notstopp des Regalbediengeräts eine geführte Auslenkung (A) des Kippmastes (4) und eine geführte Rückstellung erfolgt.

17. Verfahren zum Längspositionieren des Regalbediengerätes an einer Bedienstelle des Regals (3) nach einem der Ansprüche 1 bis 4 und 6 bis 14,
**dadurch gekennzeichnet,**
**daß** das Regalbediengerät (1) von einer ruhenden Ausgangsstelle des Regals (3) beschleunigt zu einer ausgewählten Bedienstelle des Regals und vor Erreichen der Bedienstelle verzögert dergestalt geradlinig in Längsrichtung (L) des Regals verfahren wird, daß der Knickmast (4) während zumindest eines Teils der Beschleunigungs- und/oder Verzögerungsbewegung geführt ausgelenkt und zumindest bei Stillstand des Regalbediengerätes in die ausgerichtete vertikale Normallage (N) wieder geführt rückgestellt wird.

## Claims

1. A storage and retrieval unit (1) for transporting goods (2) from or into a shelf (3) in a commissioning system, with a vertical mast (4) and with a longitudinal drive (5) connected to the mast for longitudinal displacement and longitudinal positioning of the storage and retrieval unit at a site of operation of the shelf on the shelf front or the shelf rear, wherein a height-adjustable goods receiver (7) is provided at the vertical mast,
**characterized in that** the mast is designed as an articulated mast (4) and has at least one said joint (8), which makes possible a deflection (A) of the articulated mast in the direction of longitudinal displacement (L), and that a guide/readjusting device (9) with articulated rods, especially an articulated oscillating crank (9'), which returns the articulated mast into the normal position during a guided deflection (A) of the articulated mast (4) from the vertical normal position (N), is provided for stabilization at the deflectable longitudinal end of the articulated mast.

2. A storage and retrieval unit in accordance with claim 1,
**characterized in that** the joint (8) is located in the area of the longitudinal drive (5).

3. A storage and retrieval unit in accordance with claim 1 or 2,
**characterized in that** the longitudinal drive (5) is arranged in the area of an upper or lower mast end, in particular, the articulated mast (4) is suspended on an upper chassis (12) or is supported at a lower chassis (13).

4. A storage and retrieval unit in accordance with one of the claims 1 through 3,
**characterized in that** the guide/readjusting device (9) has another longitudinal drive (6) in the manner of the longitudinal drive (5), and the two longitudinal drives (5, 6) are preferably operated synchronously.

5. A storage and retrieval unit in accordance with claim 4,
**characterized in that** the two longitudinal drives (5, 6) are operated synchronously such that the articulated mast (4) is arranged vertically during the normal operation of a longitudinal displacement of the storage and retrieval unit (1), and that guided deflection (A) of the articulated mast (4) takes place in case of an emergency stop of the storage and retrieval unit.

6. A storage and retrieval unit in accordance with one of the claims 1 through 5,
**characterized in that** the guide/readjusting device (9) comprises an elastic readjusting means.

7. A storage and retrieval unit in accordance with one of the claims 1 through 6,
**characterized in that** the goods receiver (7), which is adjustable in height at the articulated mast (4), is located in the area of the joint (8) for the longitudinal displacement (L) of the storage and retrieval unit to a site of operation of the shelf on the shelf front or on the shelf rear.

8. A storage and retrieval unit in accordance with one of the claims 3 through 7,
**characterized in that** the upper and/or lower chassis (12, 13) is/are guided in a nontilting manner in rails (10).

9. A storage and retrieval unit in accordance with claim 8,
**characterized in that** the rails (10) are integrated parts of the shelf (3).

10. A storage and retrieval unit in accordance with one of the claims 3 through 9,
**characterized in that** the chassis (12 or 13) has at least four axes with said end-side rollers (14), which are guided in said rails (10) in a nontilting manner, wherein two axes each are arranged as an axis pair one on top of another and the two axis pairs are located at horizontally spaced locations from one another at a short distance (d), preferably at a distance (d) corresponding to 2 to 3 times the diameter of the roller (14).

11. A storage and retrieval unit in accordance with claim 10,
**characterized in that** the chassis (12 or 13) has an electric drive (18) of its own with a friction wheel (17) as a driving wheel, which meshes with one of the rails (10) in a rolling-driving manner.

12. A storage and retrieval unit in accordance with one of the claims 1 through 11,
**characterized in that** the articulated mast (4), especially the joint (8), has a blocking device, which prevents deflection (A) of the articulated mast up to a mast load limit value and permits deflection (A) of the articulated mast (4) when the mast load limit value is exceeded.

13. A storage and retrieval unit in accordance with claim 12,
**characterized in that** the mast load limit value can be set.

14. A storage and retrieval unit in accordance with claim 12 or 13,
**characterized in that** the mast load limit value is a lateral force limit value of the articulated mast (4) or an acceleration/deceleration limit value of the longitudinally displaceable storage and retrieval unit.

15. A storage and retrieval unit in accordance with one of the claims 1 through 14,
**characterized in that** the guide/readjusting device (9) comprises, especially instead of the articulated rods or the oscillating crank, a bent guide, especially a sliding guide with lateral sliding blocks at the deflectable end of the articulated mast, which makes possible an exact bent guiding of the deflectable end of the articulated mast during unhindered deflection of the articulated mast along the arc and clearance-free guiding in the transverse direction.

16. A method for longitudinally positioning the storage and retrieval unit at a site of operation of the shelf (3) in accordance with one of the claims 1 through 15,
**characterized in that** the longitudinal drive or said longitudinal drives (5, 6) is/are operated such that the articulated mast (4) is arranged vertically during normal operation of a longitudinal displacement of the storage and retrieval unit (1), and that guided deflection (A) of the articulated mast (4) and guided returning takes place in case of an emergency stop of the storage and retrieval unit.

17. A method for longitudinally positioning the storage and retrieval unit at a site of operation of the shelf (3) in accordance with one of the claims 1 through 4 and 6 through 14,
**characterized in that** the storage and retrieval unit (1) is displaced linearly in the longitudinal direction (L) of the shelf from a resting starting position of the shelf (3) in an accelerated manner to a selected site of operation of the shelf and in a decelerated manner before the site of operation is reached in such a way that the articulated mast (4) is deflected in a guided manner during at least part of the accelerated and/or decelerated motion and is again returned in a guided manner into the aligned vertical normal position (N) at least during stoppage of the storage and retrieval unit.

## Revendications

1. Appareil de rayonnage (1) pour le transport de biens (2) à partir de et/ou dans un rayon (3) dans une installation de préparation des commandes, avec un poteau vertical (4) et un entraînement longitudinal (5) relié au poteau pour un déplacement longitudinal et un positionnement longitudinal de l'appareil de rayonnage au niveau d'une station de commande du rayon sur le côté avant ou arrière du rayon, un dispositif de levée des biens (7) réglable en hauteur étant prévu au niveau du poteau vertical,
**caractérisé en ce que**
le poteau prend la forme d'un poteau pivotant (4) et présente au moins une articulation (8) permettant une déviation (A) du poteau pivotant dans le sens du déplacement longitudinal (L) et qu'un dispositif de guidage/rappel (9) doté d'une tringlerie pivotante, notamment une coulisse oscillante (9') disposée de façon articulée, est prévu pour la stabilisation au niveau de l'extrémité longitudinale du poteau pivotant pouvant dévier, ledit dispositif ramenant le poteau pivotant en position normale en cas de déviation (A) guidée du poteau pivotant (4) hors de la position normale (N) verticale.

2. Appareil de rayonnage selon la revendication 1,
**caractérisé en ce que**
l'articulation (8) est située dans la zone de l'entraînement longitudinal (5).

3. Appareil de rayonnage selon la revendication 1 ou 2,
**caractérisé en ce que**
l'entraînement longitudinal (5) est disposé dans la zone de l'extrémité de poteau supérieure ou inférieure, le poteau pivotant (4) étant notamment suspendu à un mécanisme de déplacement supérieur (12) ou appuyé contre un mécanisme de déplacement inférieur (13).

4. Appareil de rayonnage selon l'une quelconque des revendications 1 à 3,
**caractérisé en ce que**
le dispositif de guidage/rappel (9) présente un entraînement longitudinal (6) supplémentaire du même type que l'entraînement longitudinal (5), les deux entraînements longitudinaux (5, 6) étant de préférence actionnés de façon synchrone.

5. Appareil de rayonnage selon la revendication 4,
**caractérisé en ce que**
les deux entraînements longitudinaux (5, 6) sont actionnés de façon synchrone de façon à ce qu'en fonctionnement normal avec déplacement longitudinal de l'appareil de rayonnage (1), le poteau pivotant (4) soit disposé verticalement et qu'en cas d'arrêt d'urgence de l'appareil de rayonnage, une déviation (A) guidée du poteau basculant (4) se produise.

6. Appareil de rayonnage selon l'une quelconque des revendications 1 à 5,
**caractérisé en ce que**
le dispositif de guidage/rappel (9) comprend des moyens de rappel élastiques.

7. Appareil de rayonnage selon l'une quelconque des revendications 1 à 6,
**caractérisé en ce que**
pour un déplacement longitudinal (L) de l'appareil de rayonnage vers une station de commande du rayon sur le côté avant ou arrière du rayon, le dispositif de levée des biens (7) réglable en hauteur au niveau du poteau pivotant (4) se trouve dans la zone de l'articulation (8).

8. Appareil de rayonnage selon l'une quelconque des revendications 3 à 7,
**caractérisé en ce que**
le mécanisme de déplacement (12, 13) inférieur et/ou supérieur est guidé sans basculement dans les rails (10).

9. Appareil de rayonnage selon la revendication 8,
**caractérisé en ce que**
les rails (10) font partie intégrante du rayon (3).

10. Appareil de rayonnage selon l'une quelconque des revendications 3 à 9,
**caractérisé en ce que**
le mécanisme de déplacement (12 ou 13) présente au moins quatre axes dotés de rouleaux (14) terminaux guidés sans basculement dans les rails (10), deux axes prenant la forme d'une paire d'axes étant respectivement disposés l'un au-dessus de l'autre et les deux paires d'axes étant écartées l'un par rapport à l'autre dans le plan horizontal d'une distance (d), de préférence d'une distance (d) de deux à trois fois le diamètre des rouleaux (14).

11. Appareil de rayonnage selon la revendication 10,
**caractérisé en ce que**
le mécanisme de déplacement (12 ou 13) présente un entraînement électrique (18) propre avec une roue de friction (17) servant de roue d'entraînement, ladite roue étant en engrenage rouleau/entraînement avec un des rails (10).

12. Appareil de rayonnage selon l'une quelconque des revendications 1 à 11,
**caractérisé en ce que**
le poteau pivotant (4), notamment l'articulation (8), présente un dispositif de verrouillage empêchant une déviation (A) du poteau pivotant jusqu'à une valeur limite de charge du poteau et autorise la déviation (A) du poteau pivotant (4) en cas de dépassement de la valeur limite de charge du poteau.

13. Appareil de rayonnage selon la revendication 12,
**caractérisé en ce que**
la valeur limite de charge du poteau peut être réglée.

14. Appareil de rayonnage selon la revendication 12 ou 13,
**caractérisé en ce que**
la valeur limite de charge du poteau est une valeur limite de force transversale du poteau pivotant (4) ou une valeur limite d'accélération/décélération de l'appareil de rayonnage mobile.

15. Appareil de rayonnage selon l'une quelconque des revendications 1 à 14,
**caractérisé en ce que**
le dispositif de guidage/rappel (9) comprend, de préférence à la place de la tringlerie pivotante ou de la coulisse oscillante, un guide en forme d'arc, notamment un guide à coulisse doté de glisseurs latéraux au niveau de l'extrémité pouvant dévier du poteau pivotant, ledit guide permettant un guidage exact en forme d'arc de l'extrémité pouvant dévier du poteau pivotant en cas de déviation sans entrave du poteau pivotant le long de l'arc et un guidage sans jeu dans la direction transversale.

16. Procédé de positionnement longitudinal de l'appareil de rayonnage au niveau d'une station de commande du rayon (3) selon l'une quelconque des revendications 1 à 15,
**caractérisé en ce que**
le ou les entraînements longitudinaux (5, 6) sont actionnés de telle sorte qu'en fonctionnement normal avec déplacement longitudinal de l'appareil de rayonnage (1), le poteau pivotant (4) est disposé verticalement et qu'en cas d'arrêt d'urgence de l'appareil de rayonnage, une déviation (A) guidée du poteau basculant (4) et un mouvement de rappel guidé se produisent.

17. Procédé de positionnement longitudinal de l'appareil de rayonnage au niveau d'une station de commande du rayon (3) selon l'une quelconque des revendications 1 à 4 et 6 à 14,
**caractérisé en ce que**
l'appareil de rayonnage (1) se déplace d'une position de départ immobile du rayon (3) en accélérant vers une station de commande choisie du rayon et avant d'atteindre la station de commande, en ralentissant de façon linéaire dans la direction longitudinale (L) du rayon de sorte que le poteau pivotant (4) soit dévié de façon guidée pendant au moins une partie du mouvement d'accélération et/ou de décélération et qu'il revienne de façon guidée dans la position normale (N) verticale centrée au moins à l'arrêt de l'appareil de rayonnage.
